# EUROPEAN PATENT SPECIFICATION

(11) **EP 1 516 525 B1**
(45) Date of publication and mention of the grant of the patent: **31.10.2012**
(21) Application number: 04255612.6
(22) Date of filing: 16.09.2004
(51) Int. Cl.: A01F 15/07

(54) **Baler and enveloping apparatus**
Ballenpresse mit Ballenumhüllungsvorrichtung
Presse à balles rondes avec dispositif d'enrubannage

(30) Priority: 16.09.2003 NO 20034110
(43) Date of publication of application: 23.03.2005
(73) Proprietor: Kuhn-Geldrop B.V., 5667 KP Geldrop (NL)
(72) Inventor: Nes, Asbjorn, 6878 Veitastrond (NO)
(74) Representative: Raynor, Simon Mark

(56) References cited:
- EP-A- 1 264 533
- EP-A- 1 321 028
- FR-A- 1 360 865
- US-A- 6 006 504

## Description

This invention relates to a baler and enveloping apparatus for forming and enveloping a cylindrical bale.

Baler apparatus for forming cylindrical bales are of the fixed chamber and the variable chamber type (and also hybrid type), and will be well known to those of ordinary skill in the art and need not be described in detail herein.

After formation of a cylindrical bale, it is usual to apply a strip of netting which is wound around the cylindrical surface of the bale, and this takes place while the formed bale remains in the bale-forming chamber. It is usually necessary to rotate the bale through up to three revolutions, in order to withdraw the netting from a supply reel and to apply three successive layers of netting around the cylindrical surface of the bale, and whereby the netting effectively forms a partial envelope around the bale.

The netting is then able to maintain the shape of the bale, during subsequent handling and eventual storage of the bale. The subsequent handling may comprise rearward discharge of the (net-enveloped) bale onto the ground, loading of the bale on a trailer and transport to a storage location.

Alternatively, especially in the case of baled grass intended to form silage, the bale is picked-up from the ground and loaded onto a bale wrapping apparatus which applies stretch film wrapping which covers the cylindrical surface of the bale, and also the two circular end faces of the bale.

The partial envelope of netting around the bale presently requires successive layers of netting in order to retain the shape of the bale, and to assist the layers of netting (two or more) to remain (a) secured to the cylindrical surface of the bale and (b) to remain secured to each other so as to prevent the netting from unwinding itself from the bale. In the case of baled straw, the individual stalks can project through the apertures in the netting and thereby help to maintain the layers of netting in position. However, in the case of baled grass (partly dried only for subsequent formation of silage), the netting has less secure engagement with the bale, and therefore has to rely more upon adhesion between successive layers of netting to maintain the shape of the bale, and which therefore in most cases necessitates use of three layers at least of netting.

It is also known to provide integrated baler and wrapper apparatus, which are capable, in a single piece of equipment, of carrying out three separate operations, namely (1) formation of a cylindrical bale, (2) application of layers of netting around a cylindrical surface of the bale to form a partial envelope and (3) application of stretch film wrapping around the partially netted bale. The third operation usually involves simultaneous rotation of the bale about its axis while an orbiting satellite film dispenser reel rotates in a horizontal plane around the rotating bale in order to apply several layers of stretch film wrapping around the bale. The final stage of wrapping applies the stretch film around both the cylindrical surface of the bale (already enveloped with layers of netting), and also covers the two circular end faces of the bale. In such an integrated apparatus, the layers of netting are required around the cylindrical surface of the bale in order to retain the shape of the bale while film-wrapping takes place.

The present invention is concerned with a more simple type of baler apparatus, and which is capable, in situ, of (a) forming the cylindrical bale, and (b) applying an envelope to the bale prior to subsequent wrapping of the bale.

It is known from US-A-6006504 to provide a baler apparatus for forming and enveloping a cylindrical bale having a cylindrical outer surface and a pair of opposed circular end faces, and which comprises:
a bale-forming chamber having opposed side walls;
means for supplying material to be baled to the chamber;
rollers, belts or like engaging means arranged around the periphery of the chamber to assist in the formation of a bale;
means for applying an elongate strip of wrapping material to the bale, such strip being of greater width than the axial extent of the bale and having a main portion which is guided to overlie the cylindrical surface of the bale, and a pair of opposed marginal portions which are guided so as to fold radially inwardly with respect to the axis of the bale and to engage each with at least an outer circumferential region of a corresponding circular end face;
and at least one guiding device mounted on each side wall of the chamber and engageable with at least part of the adjacent end face of the bale, prior to application of the strip of enveloping material, in order to urge said part of the end face axially away from the side wall.

A similar general type of baler apparatus is also known from EP 1321028.

However, in this further known apparatus, the end faces of the bale rotate closely adjacent to the side walls of the chamber, and therefore the material of the bale, and also the marginal portions of the film, are liable to come into frictional contact with the side walls, which is clearly undesirable.

The disclosure in EP 1321028 teaches a number of potential solutions to the problem of undesired contact with the side walls of the chamber which include:
a. moving the side walls away from the end face of the bale before applying the film wrapping;
b. rotating at least part of the side walls, while the film wrapping is applied; and
c. introducing air or grease into the space between the marginal portions of the film and the side walls.

The present invention seeks to provide a simpler solution to this problem, and which is applicable to reduce frictional contact between the bale end faces and the side walls of the chamber during formation of the bale; and also to reduce frictional contact between any enveloping material (netting and/or film or other covering material) overlying at least part of the end faces, and the side walls. The invention can be applied to newly manufactured apparatus, but can also be readily retrofitted to existing apparatus.

According to the invention there is provided a baler apparatus as defined in claim 1.

Preferred aspects of the invention are set out in the dependent claims.

Preferred embodiments of baler and enveloping apparatus according to the invention will now be described in detail, by way of example only, with reference to the accompanying diagrammatic drawings, in which:
Figure 1 is a diagrammatic side view of a first embodiment of combined baler, and enveloping apparatus according to the invention;
Figure 1a is a similar view of a second embodiment;
Figure 1b is a similar view of a third embodiment;
Figure 2 is a diagrammatic end view of the baler of Figure 1 or 1b (looking in a direction perpendicular to the axis of the bale) and illustrating how stretch film wrapping is guided into the bale forming chamber in order partly to wrap the bale; and
Figure 2a is a similar view corresponding to the embodiment of Figure 1a; and
Figure 3 is a perspective illustration of a practical embodiment of the invention.

Referring now to the drawings, the baler and enveloping apparatus according to the invention is designated generally by reference 10, and may be of the fixed chamber, variable chamber or hybrid type. The constructional details of such balers will be well known to those of ordinary skill in the art, and need not be described in detail herein.

The baler which will be described in more detail below forms a cylindrical bale, and then applies a longitudinal strip of netting (optionally) to envelope the cylindrical surface of the bale, and a longitudinal strip of stretchable film also overlying the cylindrical surface of the bale. In addition, the film is of a width greater than the axial extent of the bale, so that two marginal portions of the strip fold themselves downwardly of the main portion (which overlies the cylindrical surface of the bale), so as each to engage at least an outer annular portion of the respective circular end face of the bale. This downward folding takes place by reason of the elastic energy in the stretched film as it is applied to the bale.

However, it should be understood that the invention is concerned generally with application of a strip of enveloping material to the cylindrical surface of the bale, and its circular end faces, and that the strip may be netting, stretchable film or any other required covering material.

A cylindrical bale designated generally by reference 11 is formed in a bale-forming chamber 12 defined within openable housing 12b, and which is provided with rollers 12a, belts or like engaging means (not shown) arranged around the periphery of the chamber 12, to assist in the formation of the bale 11.

The bale 11 has a cylindrical outer surface 13 and a pair of opposed circular end faces 14, which extend radially inwardly of the cylindrical surface 13 with respect to longitudinal axis 15 of the bale 11.

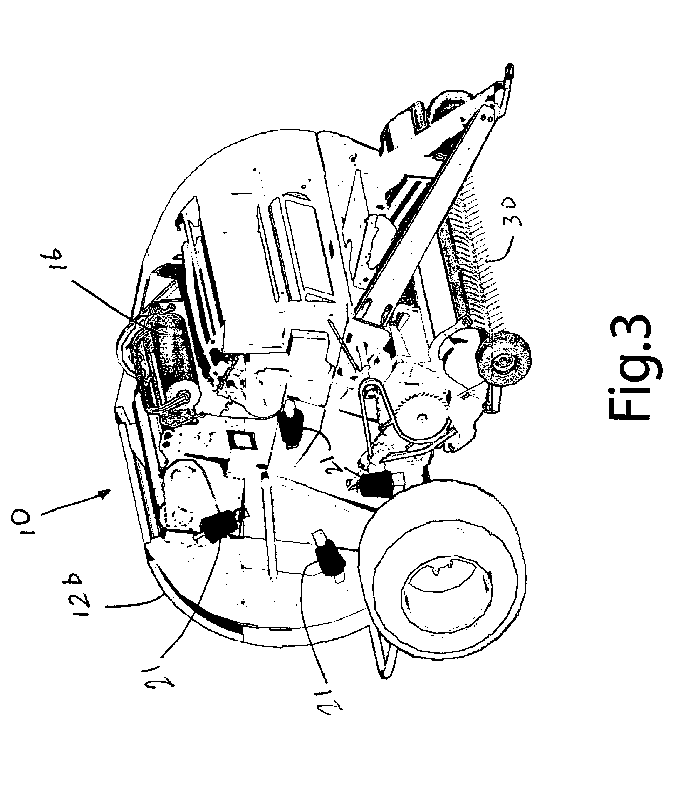

Pick-up means 30 ( Fig. 3) is provided to pick-up crop material lying on the ground, and to feed it to the chamber 12.

After formation of the bale 11, a longitudinal strip of netting may be applied to envelope the cylindrical outer surface of the bale, so that the bale can maintain its cylindrical shape, during subsequent handling of the bale. Subsequent handling of the bale may comprise rearward discharge onto the ground, or a trailer, and ultimately transport to a storage location. Other handling operations can include subsequent picking-up of the discharged bale and loading into a bale wrapper apparatus, which then applies (additional) stretch film wrapping in order to apply several wrapping layers which completely cover the cylindrical outer surface of the bale, and the two circular end faces.

Therefore, optionally means is provided to apply a longitudinal strip of netting to envelope the cylindrical outer surface of the bale, and such means is operative to feed the strip into the chamber 12, and upon rotation of the bale about its axis 15 by at least some of the engaging means 12a, to apply a layer of netting to the cylindrical surface of the bale. The netting is supplied from a reel, and is withdrawn as the bale 11 rotates, so that the netting envelops the cylindrical surface of the bale. The netting may have a width which is greater than the axial extent of the bale, so that the opposed marginal edges of the strip of netting can be folded radially inwardly with respect to the axis 15 of the bale 11 and so that each marginal edge of the netting can overlie part of the surface of the adjacent circular end face 14 of the bale. This may be achieved by incorporating resilient tensile means e.g. elasticated strips into each marginal edge of the netting, so that the edges automatically fold inwardly and move into contact with the circumferential outer region of each end face of the bale, adjacent to the comer edge which is the transition between the cylindrical surface and the circular end face.

Means is also provided to apply a longitudinal strip of stretch film wrapping to the cylindrical surface of the bale, such film also being fed into the chamber 12. Depending upon requirements, the film may overlie or underlie the netting layer to form effectively a laminated layer of film and netting secured to the cylindrical surface 13 of the bale.

The netting and the stretch film may therefore be supplied from respective dispenser reels (Figure 3) from which they are withdrawn, and an entry guide is provided in the wall of the chamber which guides the leading end of the strip of netting first onto the cylindrical surface of the bale and which is then moved forwardly by the bale to engage a first roller (of the bale-engaging means). The guide also feeds the strip of film onto the bale surface so as to underlie the netting. The film is then moved forwardly with the bale and the netting, with the film protected from contact with the first roller (and subsequent rollers) of the bale-engaging means.

It is not, however, essential to the invention to apply netting to the bale, and the application of stretchable film to the cylindrical surface of the bale can be sufficient to hold the shape of the bale under compression. Thereafter, partial or preferably complete wrapping of the enveloped bale may take place using a separate bale wrapping apparatus.

It should be noted that the longitudinal strip of stretch film wrapping which is applied to the bale has a greater width than the axial extent of the bale, and therefore has a main portion which is guided to overlie the layer of netting on the cylindrical surface 13 of the bale, and a pair of opposed marginal portions which are guided so as to fold radially inwardly, with respect to the axis of the bale, to engage each with at least an outer circumferential region of a corresponding circular end face 14 of the bale. As mentioned above, in case netting is not used, the film will be applied to hold the shape of the bale.

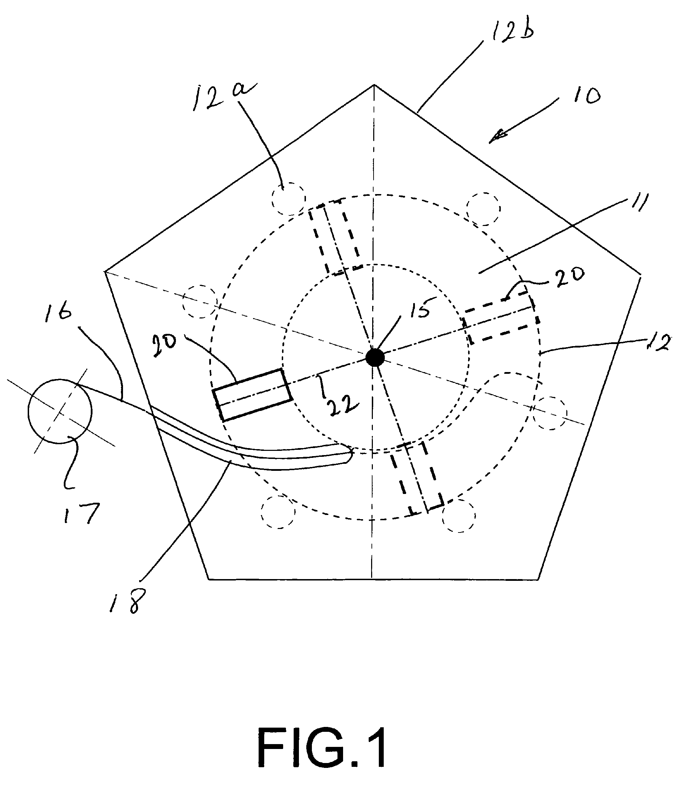

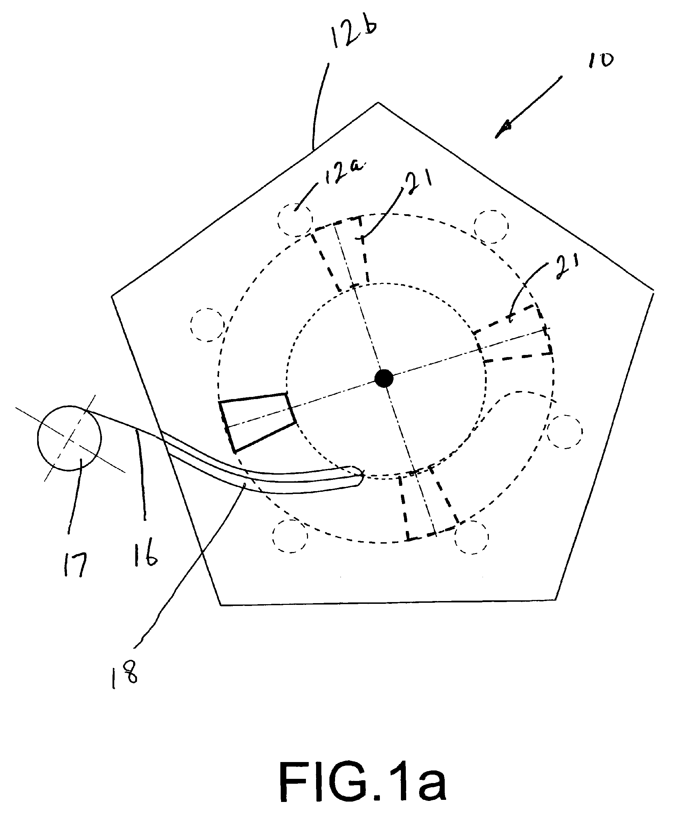

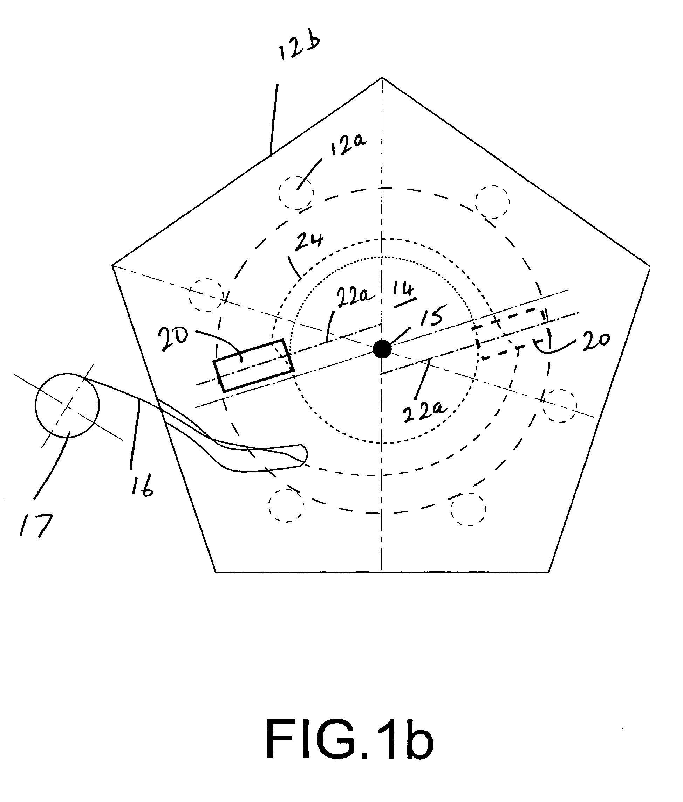

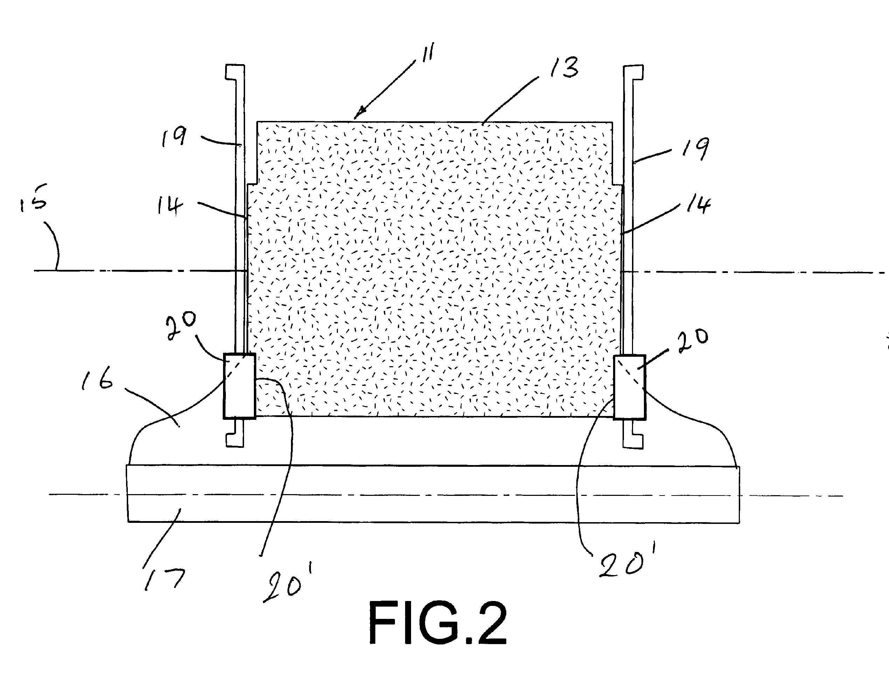

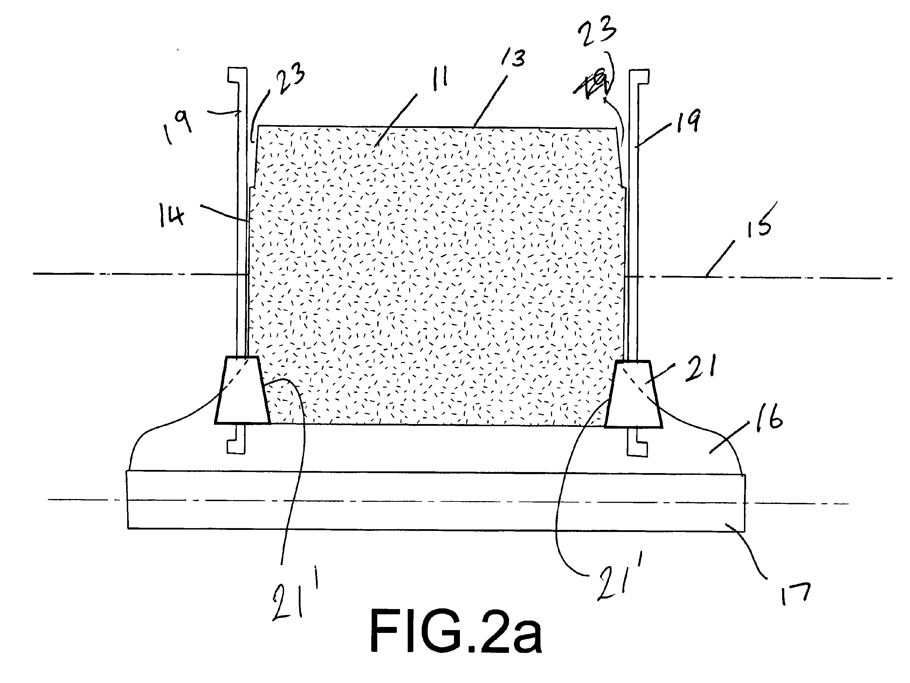

Figures 1, 1a and 1b show the supply of a strip of stretch film wrapping 16 from a supply reel 17, and into the chamber 12, via a suitable guide arrangement 18. As can be seen particularly from Figure 2, the width of the strip 16 is greater than the axial extent of bale 11, and guides 18 formed in the side walls 19 of the bale chamber 12 guide the strip so that a main portion overlies the cylindrical surface 13 of the bale, whereas marginal edge portions of the strip 16 are folded radially inwardly so as to overlie an outer circumferential portion of each side face 14 of bale 11.

With such an arrangement, the vulnerable comer edge regions of the bale are already covered with stretch film wrapping, after discharge from the baler, and subsequent picking-up and loading onto a bale wrapper apparatus. Therefore, when the wrapper apparatus is employed to complete coverage of the bale, it is only necessary to apply two layers of film to the side faces of the bale, using a normal bale wrapper. This means that less wrapping time is involved, and also economies in usage of film.

To facilitate the engagement of the side edges of the strip 16 with the peripheral margins of the end faces 14 of the bale 11, and / or prevent adhesion or frictional engagement with the side walls 19 of the bale-forming chamber 12, an arrangement of guide rollers are mounted on the side walls 19, as will be described in more detail below. The rollers guide the marginal portions of strip during the enveloping of the bale. Also, the guide rollers compress the material of the bale axially inwardly, prior to the enveloping of the bale, so as to prevent frictional contact of the bale material with the side walls 19.

The Figures of drawings do not illustrate in detail the means whereby the longitudinal strip of netting is fed to the chamber 12, so as to be applied around the cylindrical surface 13 of the bale 11, but this can take any convenient arrangement, such as are already employed in variable and fixed chamber balers.

As an alternative to use of a wide film strip 16, two or more narrower strips (not shown) may be applied, side by side (or slightly overlapping preferably), to the cylindrical surface of the bale, provided that the combined widths are greater than the axial extent of the bale.

Description will now be made of an arrangement of rotatable guiding devices which are mounted on each side wall 19 of the chamber 12, and which are engageable with at least part of the adjacent end face 14 of the bale 11, prior to application of the strip of enveloping material, in order to urge such part of the end face axially away from the side wall 19. Each guiding device is also engageable with a respective marginal portion of the strip of enveloping material, to urge the latter axially away from the side wall during application of the enveloping material.

The strip of enveloping material is preferably a longitudinal strip of stretchable film withdrawn from a supply reel, but could be, additionally, or alternatively, a longitudinal strip of netting.

As shown in Figure 1, film strip 16 is withdrawn from supply reel 17 and is guided into the chamber 12 via guide 18, and as also shown in the view of Figure 2. A set of four cylindrical guide rollers 20 is provided, mounted on each side wall 19, and with their axes of rotation 22 extending through, or substantially through the axis 15 of the bale. Four rollers 20 are illustrated, but a minimum number, within the scope of the invention, may comprise a single roller 20. The arrangement of Figure 1 shows diametrically opposed pairs of rollers 20, whereas the embodiment of Figure 1b shows a pair of rollers 20, not strictly diametrically opposed, and each having its respective axis of rotation 22a slightly offset from the axis of rotation 15 of the bale.

Figure 1a shows an alternative form of roller 21, which is of frusto-conical shape, with the larger diameter end of each roller located radially outermost. Figure 2a is a view corresponding to Figure 1a, and shows how the rollers are able to exert axial inward compression to the material in the bale 11, during formation of the bale as it rotates about its axis 15. An axial gap 23 is illustrated in Figure 2a, between each circular end face 14 of the bale and the adjacent side wall 19, by reason of the axial compression applied to the bale by the rollers 21.

As can be seen in Figures 2 and 2a, the outer surfaces of rollers 20 and 21 rotate into and out of the bale chamber 12, and the instantaneous contact portions of the surfaces which engage the end faces 14 of the bale are designated by references 20 and 21.

In an alternative mode of mounting of the conical rollers 21 (not shown), they may have their axes of rotation inclined to the vertical, namely inclined inwardly of the plane of the side walls 19, whereby the instantaneous engaging face of the outer surface of each frusto-conical roller is substantially parallel to the plane of the end face 14.

The guide rollers (20, 21) therefore are able to apply axial compression to at least the outer annular portion of each circular end face 14 of the bale, during rotation of the bale, so as to prevent (or minimise) the material of the bale coming into frictional contact with the side walls. In addition, when the strip of enveloping material is being applied to the bale, and which folds over to cover part of the circular end faces 14, the rollers also engage these folded over marginal portions, preventing (or minimising) frictional contact with the side walls 19. This therefore prevents the film from being damaged, and reduces friction, so that less power is consumed in the formation of the bale than would otherwise be the case, with consequent reduction in operating costs.

In the embodiment of Figure 1b, in which the rollers 20 are offset i.e. located forwardly relative to the rotating bale, this assists in the folding over of the marginal portions of the strip of enveloping material to engage the circular end faces 14. This can be seen by the dotted outline 24 shown in Figure 1b.

Cylindrical rollers 20 are a simple solution, as shown by reference 20, but conical rollers 21 have further advantage, in that the circumferential speed of rotation of the frusto-conical roller can correspond with the circumferential speed of the adjacent portions of the surfaces (the end face 14 of the bale and/or the film marginal portions), throughout the radial extent of each roller. Thus, the circumferential speed of the larger diameter end of each roller 21 will be greater than the smaller diameter end. This will correspond with the circumferential speeds of the adjoining portions of the end of the bale, in which the circumferential speeds will increase with distance radially outwardly of the axis of rotation 15.

A preferred development (not shown) of the arrangement of the rollers is to provide means for axial adjustment movement of each set of rollers inwardly or outwardly relative to the axis 15 of the bale. The rollers could therefore be adjusted axially outwardly, during formation of the bale, so as not to disturb the formation of the bale. The rollers may then be displaced axially inwardly, prior to application of the strip of enveloping material, to compress the bale. The rollers may then be moved axially outwardly so that the film can be applied to the bale, and optionally may move inwardly again (if required) to press the marginal portions of film against the end faces of the bale. Therefore, the sets of rollers may be displaced axially inwardly or outwardly, as may be required.

If required, a drive system (not shown) may be provided to apply power drive to the rollers, to assist the rotation of the bale and the compressive action of the rollers on the bale.

## Claims

1. A baler apparatus (10) for forming and enveloping a cylindrical bale (11) having a cylindrical outer surface (13) and a pair of opposed circular end faces (14), and which comprises:
a bale-forming chamber (12) having opposed side walls (19);
means (30) for supplying material to be baled to the chamber (12);
rollers, belts or like engaging means (12a) arranged around the periphery of the chamber (12) to assist in the formation of a bale (11);
means for applying an elongate strip of wrapping material (16) to the bale (11), such strip being of greater width than the axial extent of the bale and having a main portion which is guided to overlie the cylindrical surface (13) of the bale (11), and a pair of opposed marginal portions which are guided so as to fold radially inwardly with respect to the axis (15) of the bale (11) to engage each with at least an outer circumferential region of a corresponding circular end face (14) of the bale (11); and
at least one guiding device (20, 21) mounted on each side wall (19) of the chamber (12) and engageable with at least part of the adjacent end face (14) of the bale (11), prior to application of the strip of wrapping material (16);
**characterised in that** each guiding device (20, 21) comprises a roller that is rotatably mounted on the respective side wall (19) of the chamber (12), the inner surface portion (20', 21') of each roller (20, 21) being located axially inwardly of the respective side wall (19) of the chamber (12), so as to exert axial compression to the bale (11) and to urge said part of the end face (14) axially away from the side wall (19) in order to prevent or minimise frictional contact with the side walls (19) and at least reduce the overall frictional contact between the end face (14) and the side wall (19), and also to at least reduce the overall frictional contact between each marginal portion of the wrapping material (16) and the side wall (19).

2. Apparatus according to claim 1, in which each guiding device comprises a roller (20, 21) having an axis of rotation (22, 22a) which extends through, or close to through the axis of rotation (15) of the bale (11).

3. Apparatus according to claim 2, in which each roller is a cylindrical roller (20).

4. Apparatus according to claim 2, in which each roller (21) has a frusto-conical outer surface, of which the larger diameter end is located radially outwardly of the smaller diameter end relative to the axis (15) of the bale.

5. Apparatus according to anyone of claims 2 to 4, in which the outer surface of each roller (20, 21), during its rotation, is engageable with said part of the end face (14) of the bale (11) and/or the respective marginal portion of the strip of enveloping material (16) in a plane which is generally parallel to the end face (14) of the bale (11).

6. Apparatus according to any one of the preceding claims, including a first dispenser arrangement for supplying a strip of stretchable film (16) to form said strip of enveloping material.

7. Apparatus according to claim 6, including a second dispenser arrangement for supplying a strip of netting.

8. Apparatus according to claim 6, in which the stretch film wrapping (16) is formed by a single longitudinal strip.

9. Apparatus according to claim 6, in which the stretch film wrapping (16) is formed by two or more narrow strips arranged side by side, preferably overlapping, and having a combined width greater than the axial extent of the bale (11).

10. Apparatus according to anyone of claims 7 to 9, in which the longitudinal strip of netting has a width which is greater than the axial extent of the bale (11), so that opposed marginal edge regions of the strip of netting also can fold radially inwardly, so as to engage over the corner edge region of the bale and engage the outer circumferential region of each corresponding circular end face (14) of the bale (11).

11. Apparatus according to any one of the preceding claims, in which the rotatable guiding devices (20, 21) are axially adjustable relative to the axis (15) of the bale, and therefore relative to the end faces (14) of the bale.

12. Apparatus according to any one of the preceding claims, in which at least a pair of rotatable rollers (20, 21) is provided on each side wall (19) of the chamber (12).

13. Apparatus according to claim 12, in which the pair of rollers (20) are diametrically opposed to each other with respect to the axis (15) of the bale (11).

14. Apparatus according to claim 12, in which the axes of rotation (22a) of the pair of rollers (20) are offset oppositely relative to the axis (15) of the bale.

15. Apparatus according to any one of claims 1 to 14, in which the guiding device (20, 21) is engageable with a respective marginal portion of the strip of enveloping material to urge the latter axially away from the side wall (19).

## Patentansprüche

1. Ballenwickelvorrichtung (10) zum Herstellen und Einhüllen eines zylindrischen Ballens (11), der eine zylindrische Außenfläche (13) und ein Paar einander entgegengesetzter kreisförmiger Stirnflächen (14) hat, und die Folgendes aufweist:
eine Ballenformkammer (12) mit einander entgegengesetzten Seitenwänden (19),
eine Einrichtung (30) zum Zuführen von zu Ballen zu pressendem Material zu der Kammer (12),
Rollen, Riemen oder derartige Eingriffsmittel (12a), die um den Umfang der Kammer (12) angeordnet sind, um beim Formen des Ballens (11) behilflich zu sein,
Mittel zum Aufbringen eines länglichen Umhüllungsmaterialstreifens (16) auf den Ballen (11), wobei ein derartiger Streifen eine größere Breite aufweist als die axiale Erstreckung des Ballens und einen Hauptteil, der so geführt wird, dass er die zylindrische Oberfläche (13) des Ballens (11) überlagert, und ein Paar einander entgegengesetzter Randteile hat, die so geführt werden, dass sie sich in Bezug auf die Achse (15) des Ballens (11) radial einwärts falten, um jeweils mit wenigstens einer äußeren Umfangsregion einer entsprechenden kreisförmigen Stirnfläche (14) des Ballens (11) in Eingriff zu kommen, und
wenigstens eine Führungsvorrichtung (20, 21), die an jeder Seitenwand (19) der Kammer (12) montiert ist und an wenigstens einem Teil der angrenzenden Stirnfläche (14) des Ballens (11) in Eingriff gebracht werden kann, bevor der Umhüllungsmaterialstreifen (16) aufgebracht wird,
**dadurch gekennzeichnet, dass** jede Führungsvorrichtung (20, 21) eine Rolle umfasst, die drehbar an der jeweiligen Seitenwand (19) der Kammer (12) montiert ist, wobei sich der Innenflächenteil (20', 21') jeder Rolle (20, 21) axial einwärts von der jeweiligen Seitenwand (19) der Kammer (12) befindet, um axialen Druck auf den Ballen (11) auszuüben und das genannte Teil der Stirnfläche (14) axial von der Seitenwand (19) weg zu drängen, um Reibungskontakt mit den Seitenwänden (19) zu verhüten oder zu minimieren und den Reibungskontakt insgesamt zwischen der Stirnfläche (14) und der Seitenwand (19) wenigstens zu verringern, und auch, um den Reibungskontakt ingesamt zwischen jedem Randteil des Umhüllungsmaterials (16) und der Seitenwand (19) wenigstens zu verringern,

2. Vorrichtung nach Anpruch 1, wobei jede Führungsvorrichtung eine Rolle (20, 21) aufweist, die eine Drehachse (22, 22a) hat, die durch oder fast durch die Drehachse (15) des Ballens (11) verläuft.

3. Vorrichtung nach Anspruch 2, wobei jede Rolle eine zylindrische Rolle (20) ist.

4. Vorrichtung nach Anspruch 2, wobei jede Rolle (21) eine kegelstumpfförmige Außenfläche hat, deren Ende mit größerem Durchmesser relativ zur Achse (15) des Ballens radial auswärts von dem Ende mit kleinerem Durchmesser liegt.

5. Vorrichtung nach einem der Ansprüche 2 bis 4, wobei die Außenfläche jeder Rolle (20, 21) während ihrer Drehung mit dem genannten Teil der Stirnfläche (14) des Ballens (11) und/oder dem jeweiligen Randteil des Einhüllungsmaterialstreifens (16) in einer Ebene in Eingriff gebracht werden kann, die allgemein parallel zur Stirnfläche (14) des Ballens (11) ist.

6. Vorrichtung nach einem der vorhergehenden Ansprüche, die eine erste Ausgabeanordnung zum Zuführen eines Streifens dehnbarer Folie (16) zum Bilden des genannten Umhüllungsmaterialstreifens aufweist.

7. Vorrichtung nach Anspruch 6, die eine zweite Ausgabeanordnung zum Zuführten eines Netzmaterialstreifens aufweist.

8. Vorrichtung nach Anspruch 6, wobei die Dehnfolienumhüllung (16) aus einem einzelnen länglichen Streifen gebildet wird.

9. Vorrichtung nach Anspruch 6, wobei die Dehnfolienumhüllung (16) aus zwei oder mehr schmalen Streifen gebildet wird, die nebeneinander, vorzugsweise einander überlappend, angeordnet sind und eine kombinierte Breite haben, die größer als die axiale Erstreckung des Ballens (11) ist.

10. Vorrichtung nach einem der Ansprüche 7 bis 9, wobei der längliche Netzmaterialstreifen eine Breite hat, die größer als die axiale Erstreckung des Ballens (11) ist, so dass einander entgegengesetzte Randkantenregionen des Netzmaterialstreifens sich auch radial einwärts falten können, um über die Eckrandregion des Ballens in Eingriff zu kommen und die äußere Umfangsregion jeder entsprechenden kreisförmigen Stirnfläche (14) des Ballens (11) in Eingriff zu nehmen.

11. Vorrichtung nach einem der vorhergehenden Ansprüche, wobei die drehbaren Führungseinrichtungen (20, 21) relativ zur Achse (15) des Ballens und daher relativ zu den Stirnflächen (14) des Ballens axial verstellbar sind.

12. Vorrichtung nach einem der vorhergehenden Ansprüche, wobei an jeder Seitenwand (19) der Kammer (12) wenigstens ein Paar drehbarer Rollen (20, 21) bereitgestellt sind.

13. Vorrichtung nach Anspruch 12, wobei die beiden Rollen (20) einander in Bezug auf die Achse (15) des Ballens diametral gegenüberliegen.

14. Vorrichtung nach Anspruch 12, wobei die Drehachsen (22a) des Rollenpaares (20) relativ zur Achse (15) des Ballens einander entgegengesetzt versetzt sind.

15. Vorrichtung nach einem der Ansprüche 1 bis 14, wobei die Führungsvorrichtung (20, 21) mit einem jeweiligen Randteil des Umhüllungsmaterialstreifens in Eingriff gebracht werden kann, um Letzeren axial von der Seitenwand (19) weg zu drängen.

## Revendications

1. Appareil de mise en balles (10) destiné à former et à envelopper une balle cylindrique (11) possédant une surface extérieure cylindrique (13) et une paire de faces d'extrémité circulaires opposées (14), et qui comprend :
une chambre de formation de balles (12) possédant des parois latérales opposées (19),
un moyen (30) de fourniture d'un matériau à mettre en balles à la chambre (12),
des rouleaux, des courroies ou des moyens de mise en prise de même nature (12a) agencés autour de la périphérie de la chambre (12) de façon à faciliter la formation d'une balle (11),
un moyen d'application d'une bande allongée de matériau d'emballage (16) à la balle (11), ladite bande étant plus large que l'étendue axiale de la balle et possédant une partie principale qui est guidée de façon à recouvrir la surface cylindrique (13) de la balle (11), et une paire de parties marginales opposées qui sont guidées de façon à se plier radialement vers l'intérieur par rapport à l'axe (15) de la balle (11) de façon à entrer en prise chacune avec au moins une zone circonférentielle extérieure d'une face d'extrémité circulaire correspondante (14) de la balle (11), et
au moins un dispositif de guidage (20, 21) monté sur chaque paroi latérale (19) de la chambre (12) et pouvant entrer en prise avec au moins une partie de la face d'extrémité adjacente (14) de la balle (11), avant l'application de la bande de matériau d'emballage (16),
**caractérisé en ce que** chaque dispositif de guidage (20, 21) comprend un rouleau qui est monté rotatif sur la paroi latérale respective (19) de la chambre (12), la partie de surface intérieure (20', 21') de chaque rouleau (20, 21) étant située axialement vers l'intérieur de la paroi latérale respective (19) de la chambre (12), de façon à exercer une compression axiale sur la balle (11) et de façon à repousser ladite partie de la face d'extrémité (14) axialement de la paroi latérale (19) afin d'empêcher ou de minimiser un contact par frottement avec les parois latérales (19) et au moins réduire le contact par frottement global entre la face d'extrémité (14) et la paroi latérale (19), et également au moins de façon à réduire le contact par frottement global entre chaque partie marginale du matériau d'emballage (16) et la paroi latérale (19).

2. Appareil selon la Revendication 1, dans lequel chaque dispositif de guidage comprend un rouleau (20, 21) possédant un axe de rotation (22, 22a) qui s'étend au travers de, ou pratiquement au travers de, l'axe de rotation (15) de la balle (11).

3. Appareil selon la Revendication 2, dans lequel chaque rouleau est un rouleau cylindrique (20).

4. Appareil selon la Revendication 2, dans lequel chaque rouleau (21) possède une surface extérieure tronconique, dont l'extrémité de plus grand diamètre est située radialement vers l'extérieur de l'extrémité de plus petit diamètre par rapport à l'axe (15) de la balle.

5. Appareil selon l'une quelconque des Revendications 2 à 4, dans lequel la surface extérieure de chaque rouleau (20, 21), au cours de sa rotation, peut entrer en prise avec ladite partie de la face d'extrémité (14) de la balle (11) et/ou avec la partie marginale respective de la bande de matériau enveloppant (16) dans un plan qui est généralement parallèle à la face d'extrémité (14) de la balle (11).

6. Appareil selon l'une quelconque des Revendications précédentes, comprenant un premier système distributeur destiné à fournir une bande de film étirable (16) de façon à former ladite bande de matériau enveloppant.

7. Appareil selon la Revendication 6, comprenant un deuxième système distributeur destiné à fournir une bande de filet.

8. Appareil selon la Revendication 6, dans lequel l'emballage en film étirable (16) est formé par une bande longitudinale unique.

9. Appareil selon la Revendication 6, dans lequel l'emballage en film étirable (16) est formé par deux ou plus bandes étroites disposées côte à côte, de préférence en chevauchement, et possédant une largeur combinée supérieure à l'étendue axiale de la balle (11).

10. Appareil selon l'une quelconque des Revendications 7 à 9, dans lequel la bande de filet longitudinale possède une largeur qui est supérieure à l'étendue axiale de la balle (11), de sorte que des zones de bordure marginales opposées de la bande de filet puissent également se replier radialement vers l'intérieur, de façon à entrer en prise par dessus la zone de bordure d'angle de la balle et entrer en prise avec la zone circonférentielle extérieure de chaque face d'extrémité circulaire correspondante (14) de la balle (11).

11. Appareil selon l'une quelconque des Revendications précédentes, dans lequel les dispositifs de guidage rotatifs (20, 21) sont réglables axialement par rapport à l'axe (15) de la balle, et en conséquence par rapport aux faces d'extrémité (14) de la balle.

12. Appareil selon l'une quelconque des Revendications précédentes, dans lequel au moins une paire de rouleaux rotatifs (20, 21) est disposée sur chaque paroi latérale (19) de la chambre (12).

13. Appareil selon la Revendication 12, dans lequel les rouleaux de la paire de rouleaux (20) sont diamétralement opposés l'un à l'autre par rapport à l'axe (15) de la balle (11).

14. Appareil selon la Revendication 12, dans lequel les axes de rotation (22a) de la paire de rouleaux (20) sont décalés de manière opposée par rapport à l'axe (15) de la balle.

15. Appareil selon l'une quelconque des Revendications 1 à 14, dans lequel le dispositif de guidage (20, 21) peut entrer en prise avec une partie marginale respective de la bande de matériau enveloppant de façon à repousser cette dernière axialement de la paroi latérale (19).
